# EUROPEAN PATENT APPLICATION

(11) **EP 3 748 518 A1**
(43) Date of publication of application: **09.12.2020**
(21) Application number: 19178776.1
(22) Date of filing: 06.06.2019
(51) Int. Cl.: G06F 16/901

(54) **DESIGNING AND BUILDING AN AUTOMATION SYSTEM TO PERFORM RULE-BASED TRANSFORMATIONS ON COMPLEX TECHNICAL SYSTEMS**

(71) Applicant: Siemens Aktiengesellschaft, 80333 München (DE)
(72) Inventor: Mogoreanu, Serghei, 81827 München (DE); Rümmele, Nataliia, 81739 München (DE); Shyam Sunder, Swathi, 81549 München (DE)

(57) **Abstract**

The invention specifies a computerized method for designing a technical system based on generated rules and building the technical system, whereas the technical system and the generated rules are given in graph representations, comprising the steps:
- Defining (S1) rules by a user and representing them in a graphical interface,
- converting (S2) the rules from the graphical interface into a programming language and/ or a natural language,
- validating (S3) the rules for the technical system,
- checking (S4) the compatibility of the rules,
- serializing (S5) the rules for storage in a file system or a database,
- using (S6) the serialized rules to design the technical system, and
- building (S7) the designed technical system by a construction system.

The invention further specifies a computational device, a computer program product, and a computer-readable storage medium.

## Description

### Field of the Invention

The present invention relates to computerized method for designing a technical system (e.g. an automation system) based on generated rules and building the technical system, whereas the technical system and the generated rules are given in graph representations.

The computerized method allows to specify/ generate the rules for desired/required transformations of the given technical system and to automatically evaluate the specified rules on the given technical system.

The invention further specifies a computational device, a computer program product, and a computer-readable storage medium.

### Background of the Invention

Complex technical systems consist of many diverse inter-connected components. Examples for such complex technical systems are industrial systems, engineering systems, automatization systems, and technical projects on the industrial system. Representing such systems as graphs is the most natural way since the components are inter-connected. In addition, this form of representation allows for incorporating present hierarchies of system components as well as their configuration parameters.

To design and maintain such systems, engineers often have a set of rules either explicitly or implicitly present. These rules can cover different aspects of the complex system, e.g. they might indicate what configuration parameters should be used for combinations of components, what additional components should be added given the current state of the system, or how present components should be connected. However, there is no standard approach how an engineer can specify such rules and evaluate them against the given system.

Since the complex technical system can be represented as a graph, it is natural to assume that rules for system maintenance and development can be expressed using graph representation.

So far, there is no standard to specify rules for engineering tasks/ representing technical systems as graphs. Often such rules are not even written down explicitly in a machine-readable format and exist implicitly in the minds of experts. This not only slows down the process of evaluating rules, but also complicates knowledge sharing in the domain. Another potential risk is inconsistence among rules.

The process to identify which graph transformations need to be triggered based on the given collection of rules is mainly performed via manual inspection of the technical project. Such approach requires considerable time and effort from engineers and can be highly error prone.

### Summary of the Invention

The objective of the present invention is to improve the representation of technical systems and facilitate the construction, configuration and maintenance of technical systems.

The invention is given by the features of the independent claims.

Advantageous embodiments are provided in the dependent claims. Further features, application possibilities, and advantages of the invention result from the following description.

According to the invention the objective is accomplished by a method to define and validate rules to be used to represent and construct a technical system.

The invention claims a computerized method for designing a technical system based on generated rules and building/ constructing the technical system, whereas the technical system and the generated rules are given in graph representations, comprising the steps:
- Defining (or specifying or initializing) rules by a user and representing them in a graphical interface,
- converting the rules from the graphical interface into a programming language and/ or a natural language,
- validating the rules for the technical system,
- checking the compatibility/ consistency of the rules,
- serializing the rules for storage in a file system or a database,
- using the serialized rules to design the technical system, and
- building/ constructing the designed technical system by a construction system.

"Validating the rules for the technical system" means that it is validated if the rule can be applied to the technical system. This process also includes presenting effects of the rules on the technical system, which we call "rule-based" transformations.

"Checking the compatibility/ consistency of the rules" means that it is checked if there are e.g. some rules which have the same condition but conflicting consequences.

The invention has the advantage that it considerably simplifies the process of constructing rules for designing/ configuring technical projects/systems, but also ensures their quality (by providing a way to validate the constructed rule, as well as compare it to the existing ones), thus promoting efficient knowledge transfer between users.

According to a further embodiment each rule is specified as a tuple with a technical condition (in form of a graph) and a corresponding technical consequence (in form of another graph). If the technical condition is satisfied, the corresponding technical consequence will take effect.

An example for a technical condition is e.g. a measured air pressure above a certain value, with the corresponding technical consequence is e.g. to reduce the air pressure by a specific amount or based on a certain threshold.

A further example is the presence of pressure relief valve component within a system (condition), which requires the engineer to add a programming block responsible for checking the air pressure (condition). In this example the condition and the consequence refer to things of different nature within the system.

To allow defining/ specifying/ initializing such (condition, consequence) rules, we propose the following different possibilities:
a. Elements of the technical system are represented by nodes and connections between the elements are represented by links between the nodes.
b. The nodes and links can be modified by specifying type and other data properties.
c. Guidance is provided to the user by validation of input against the domain ontology. Depending on the nature of the ontology, the user might expect, for example, a warning when specifying a link (relation) between elements, for which such a link (relation)is not applicable
d. Initialization of rules from the graph representation of the technical system.
e. Initialization of rules from the graph representation of the technical system either by clicking single nodes or selecting areas of the graph.
f. Initialization of rules from existing collection of rules.

According to a further embodiment the programming language is a graph query in SPARQL, GDL, Cypher, Gremlin, or another language, based on the corresponding selected data model.

The natural language into which the rules are converted from the graphical interface can use sentences in form of "If..., then..." constructions to describe the technical condition-consequence-tuples.

According to a further embodiment the results of the validation are shown in the graphical interface. This has the advantage that it is visually illustrated which and how parts of the technical system/ technical project are affected by the defined rules.

According to a further embodiment semi-automatically and/ or automatically generated descriptions and/ or annotations are added to the rules. This has the advantage that explanations for the rules are given, which can help a user.

According to a further embodiment a user of the technical system is notified if the compatibility check detects compatibility conflicts. This has the advantage that the user can changes rules if conflicts are found.

According to a further embodiment the serialized rules are persisted to a file system and/ or stored within a database. For example, if Resource Description Framework (RDF) is used for the graph representation, rules can be serialized using RDF syntax and persisted within the graph database (in case of RDF graph such a database will most likely be a triple store) in a dedicated named graph.

According to a further embodiment the graph representation of the rules and of the technical system follows a domain ontology. For example, this means that rules operate with vocabulary outlined in the ontology.

According to a further embodiment the domain ontology can be provided using, for example, the Resource Description Framework (RDF), the Labelled Property Graph Model (Labelled PGM) or the Extended Property Graph Model (Extended PGM).

There are two possibilities to model the technical system as a graph, namely RDF and PGM (Property Graph Model, including all available variations, such as Labelled-property graph or Extended Property Graph Model). The choice of the model can be based on the specific requirements, such as efficiency, data complexity, and sharing of data.

While it is not necessary for the ontology to adhere to the RDF (Resource Description Framework) specification, doing so would lead to various benefits, simply because of the availability of tools based on RDF and the associated capabilities.

Further, the selection of the graph data model drives the choice of language used to query the graph. For example, while SPARQL is part of the RDF stack, Cypher and GDL are used with property graphs. There is also Gremlin. Our invention can be tailored towards the usage of either representation model (RDF or PGM) and correspondingly to either choice of a graph query language as well as a graph database management system (e.g., BlazeGraph, Neo4j, Amazon Neptune etc.).

According to a further embodiment the technical system is an engineering system, an automatization system, a production system and/ or an industrial system and/ or includes a technical project on the technical system.

The present invention further claims a computational device designed to carry out the steps of the inventive method.

The present invention further claims a computer program product comprising instructions which, when the program is executed by the computational device, cause the computational device to carry out the steps of the inventive method.

The present invention further claims a computer-readable storage medium comprising instructions which, when executed by the computational device, cause the computational device to carry out the steps of the inventive method.

The technical features described in the inventive method lead to the following advantages:
1) Reduced time and effort owing to the automated evaluation of rules.
2) Possibility for reusing the rules among engineers.
3) A consistent way of representing rules, which improves knowledge transfer among engineers. So far, there is no standard approach how an engineer can specify such rules and evaluate them against a technical project.
4) Improved quality of rules resulting from the automated evaluation and consistency checks on rule collections.

Further benefits and advantages of the present invention will become apparent after a careful reading of the detailed description with appropriate reference to the accompanying drawings.

### Brief Description of the Drawings

- Fig. 1: shows a flow diagram,
- Fig. 2: shows a user interface for defining, configuring, visualizing, and evaluating rules in the form of a tuple of graph patterns,
- Fig. 3: shows how to modify defined rules,
- Fig. 4: shows rules automatically converted into a programming language,
- Fig. 5: shows rules automatically converted into a natural language, and
- Fig. 6: shows a validation of the rules for a technical system.

### Detailed Description of the Invention

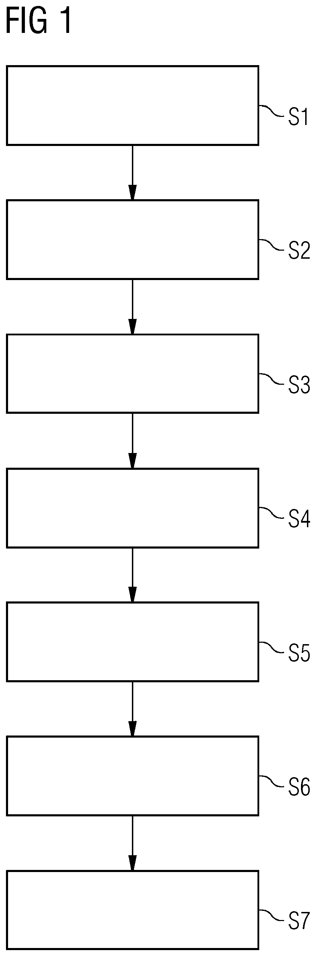

**Fig. 1** shows a flow diagram of the computerized method for designing a technical system based on generated rules and building the technical system, whereas the technical system and the generated rules are given in graph representations.

The method comprises the steps:
- In step S1 rules are defined by a user in the graphical interface,
- in step S2 the rules are converted from the graphical interface into a programming language and/ or a natural language,
- in step S3 the rules are validated for the technical system,
- in step S4 the compatibility of the rules is checked,
- in step S5 the rules are serialized for storage in a file system or a database,
- in step S6 the serialized rules are used to design the technical system, and
- in step S7 the designed technical system is designed by a construction system.

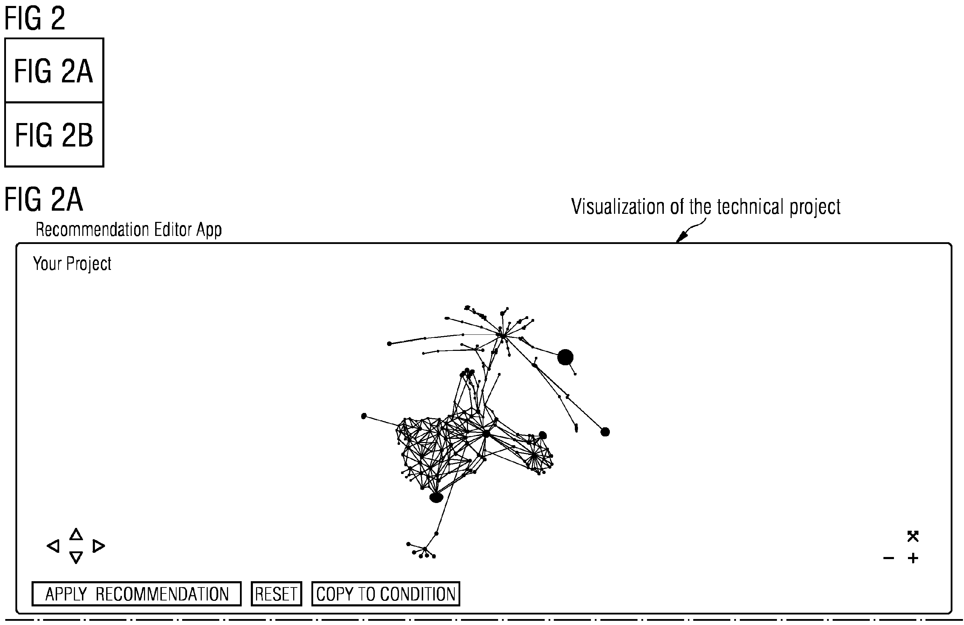

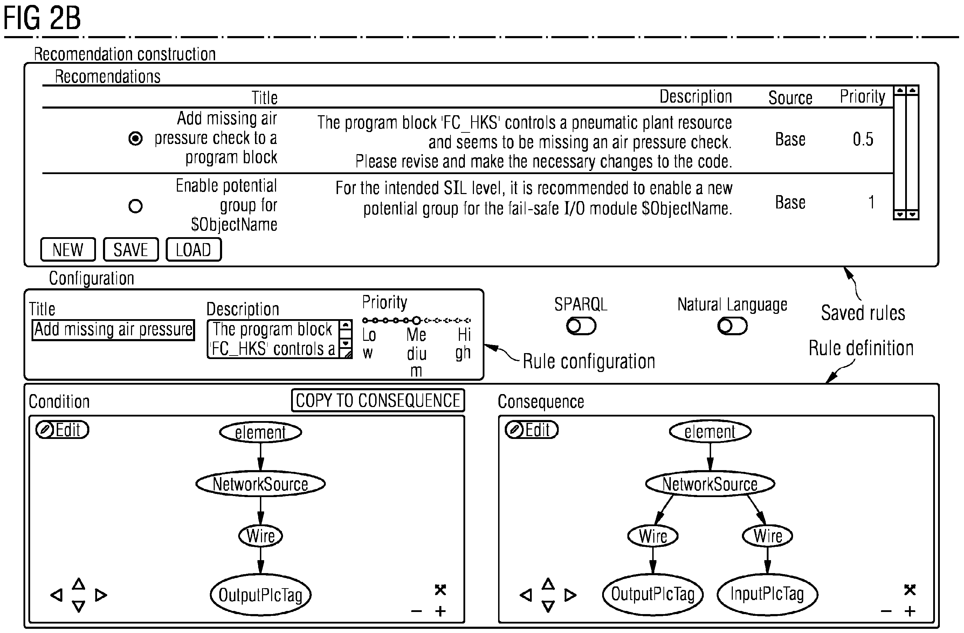

**Fig. 2** depicts the complete interface for the proposed method executed by a computer program product comprising instructions which, when the computer program product is executed by a computational device, cause the computational device to carry out the steps of the inventive method.

The various components shown in **Fig. 2** correspond to the features described by the inventive method. The top box/ first box shows the "Visualization of the technical project" in form of a graph. The second box (saved rules) and the third box (rule configuration)/ boxes in the middle help the user with the definition of the rules. The bottom box/ fourth box shows the "rule definition" with a technical condition and its technical consequence.

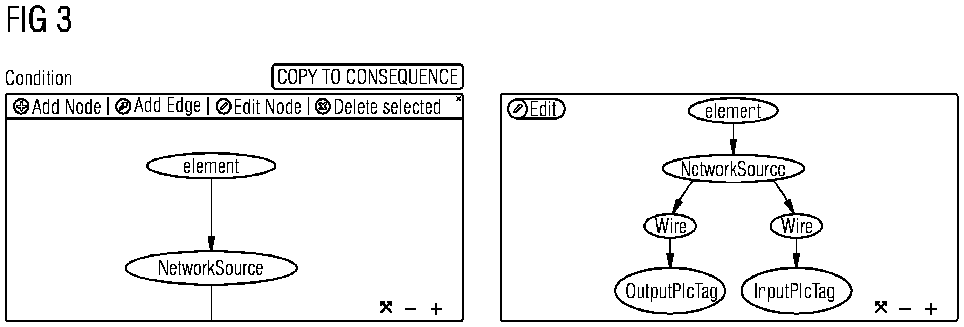

**Fig. 3** shows how to modify defined rules. By clicking on the edges (arrows) or nodes (bubbles) the user can select them for modification or deletion. Selected edges or nodes have a different colour. The user can also add new edges or nodes.

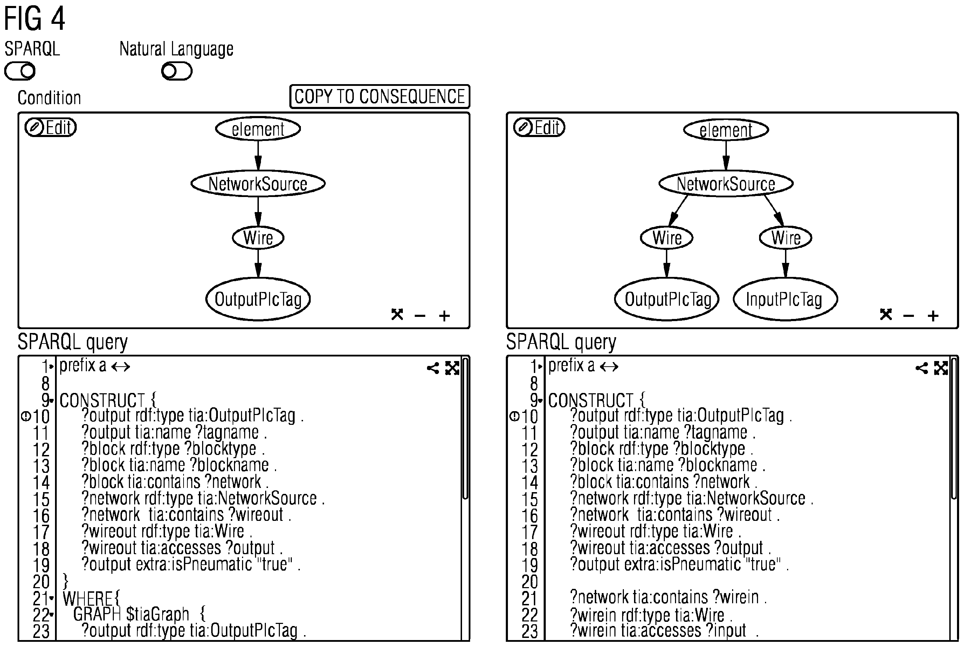

**Fig. 4** shows rules automatically converted into a programming language. In the example SPARQL queries are auto-generated based on a defined/ specified rule.

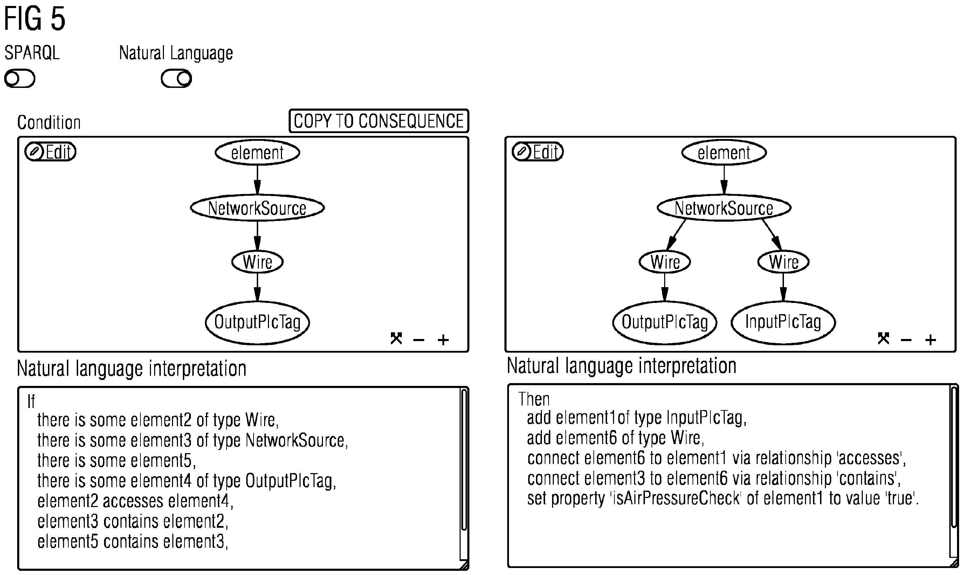

**Fig. 5** shows rules automatically converted into a natural language based on a defined/ specified rule.

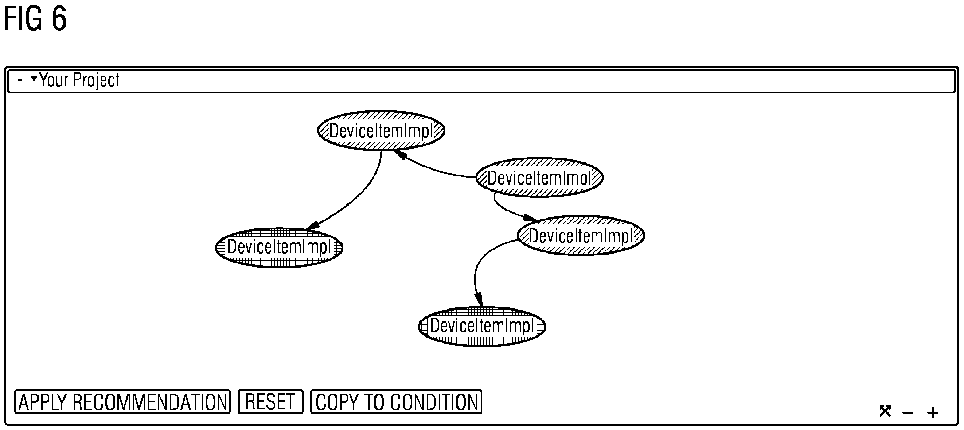

**Fig. 6** shows a validation of the rules for a technical system. The example illustrates how a user can evaluate a defined rule against/ for the technical project. First, the elements of the project that get matched according to the condition of the rule are coloured in one colour (here striped). Then, the modified elements are coloured differently (here squared). Like this it is validated if the rule can be applied to the technical system.

Although the invention has been explained in relation to its preferred embodiments as mentioned above, it is to be understood that many other possible modifications and variations can be made without departing from the scope of the present invention. It is, therefore, contemplated that the appended claim or claims will cover such modifications and variations that fall within the true scope of the invention.

## Claims

1. Computerized method for designing a technical system based on generated rules and building the technical system, whereas the technical system and the generated rules are given in graph representations, comprising the steps:
- Defining (S1) rules by a user and representing them in a graphical interface,
- converting (S2) the rules from the graphical interface into a programming language and/ or a natural language,
- validating (S3) the rules for the technical system,
- checking (S4) the compatibility of the rules,
- serializing (S5) the rules for storage in a file system or a database,
- using (S6) the serialized rules to design the technical system, and
- building (S7) the designed technical system by a construction system.

2. Method according to claim 1, **whereas**
each rule is specified as a tuple with a technical condition and a corresponding technical consequence.

3. Method according to one of the previous claims, **whereas** the programming language is a graph query, in SPARQL, GDL, Cypher, Gremlin, or another language, based on the corresponding selected data model.

4. Method according to one of the previous claims, **whereas** the results of the validation are shown in the graphical interface.

5. Method according to one of the previous claims, **whereas** semi-automatically and/ or automatically generated descriptions and/ or annotations are added to the rules.

6. Method according to one of the previous claims, **whereas** a user of the technical system is notified if the compatibility check detects compatibility conflicts.

7. Method according to one of the previous claims, **whereas** the serialized rules are persisted to a file system and/ or stored within a database.

8. Method according to one of the previous claims, **whereas** the graph representation of the rules and of the technical system follows a domain ontology.

9. Method according to claim 8, **whereas**
the domain ontology adheres to the Resource Description Framework (RDF), to the Labelled Property Graph Model (Labelled PGM) or to the Extended Property Graph Model (Extended PGM) .

10. Method according to one of the previous claims, **whereas** the technical system is an engineering system, an automatization system, a production system and/ or an industrial system and/ or includes a technical project on the technical system.

11. Computational device designed to carry out the steps of the method according to one of the claims 1 to 10.

12. A computer program product comprising instructions which, when the program is executed by the computational device, cause the computational device to carry out the steps of the method according to one of the claims 1 to 10.

13. A computer-readable storage medium comprising instructions which, when executed by the computational device, cause the computational device to carry out the steps of the method of claim according to one of the claims 1 to 10.
